Europäisches Patentamt

European Patent Office

Office européen des brevets

(11) Veröffentlichungsnummer: **0 328 936**

**A1**

## EUROPÄISCHE PATENTANMELDUNG

(21) Anmeldenummer: 89101675.0

(51) Int. Cl.⁴: **B29B 7/40**

(22) Anmeldetag: 01.02.89

(30) Priorität: 19.02.88 CH 616/88

(43) Veröffentlichungstag der Anmeldung:
23.08.89 Patentblatt 89/34

(84) Benannte Vertragsstaaten:
**AT BE DE ES FR GB IT LU NL SE**

(71) Anmelder: **Dimatec System AG**
**Mettlenbachstrasse 25**
**CH-8617 Mönchaltorf(CH)**

(72) Erfinder: **Gehring, René**
**Mettlenbachstrasse 25**
**CH-8617 Mönchaltorf(CH)**
Erfinder: **Scherer, Benjamin**
**Anemonenstrasse 30**
**CH-8047 Zürich(CH)**

(74) Vertreter: **Blum, Rudolf Emil Ernst et al**
**c/o E. Blum & Co Patentanwälte Vorderberg**
**11**
**CH-8044 Zürich(CH)**

(54) **Mischgerät für mindestens zwei zähflüssige Medien.**

(57) Es sollen solche das Mischen bewirkende Misch-Schikanen (17,18) geschaffen werden, die einerseits eine intensive Vermischung ergeben und andererseits gewährleisten, dass die miteinander vermischten Medien möglichst vollständig durch das Mischgerät hindurch und aus dem Auslass (6) gefördert werden. Das ist besonders dann wichtig, wenn die Medien ein Kleber und ein Aushärtungs-Beschleuniger sind. Hierzu werden die Misch-Schikanen als Stifte (17,18) ausgebildet, die eine kreis-, oval- oder tropfenförmige Querschnittsfläche aufweisen. Es ergeben sich hierdurch keine Stauflächen für die strömenden Medien und eine möglichst wirbelfreie Strömung

*Fig.1*

EP 0 328 936 A1

## Mischgerät für mindestens zwei zähflüssige Medien

Die Erfindung betrifft ein Mischgerät für mindestens zwei zähflüssige Medien, mit einem Mischkopf zum Leiten der Medien, einer Mischkammer zum Mischen der Medien und einem Auslass für die miteinander vermischten Medien, wobei sich innerhalb der gehäusefesten Mischkammer eine drehbare Mischerwelle befindet, deren Mantelfläche mit ersten Misch-Schikanen bestückt ist.

Bei einem solchen bekannten Mischgerät sind die Misch-Schikanen als schräggestellte Mischflügel und als Längsrinnen ausgebildet. Jeder Mischflügel ist somit Teil einer Wendel. Die Mischflügel sind hierbei so zueinander angeordnet, als wenn mehrgängige Wendeln vorliegen würden. Die Mischflügel haben somit das Aussehen einer Gebläse-Beschaufelung. Die erwähnten Wendeln sind hierbei rechtsgängig und linksgängig, so dass sie gegeneinander fördern, einen Stau der zu mischenden Medien zwischen den hintereinandergeschalteten Mischflügeln hervorrufen, worauf dann die zu mischenden Medien Längsrinnen passieren müssen, die eine verminderte Querschnittsfläche aufweisen, so dass also die Strömungsgeschwindigkeit der miteinander vermischten Medien wesentlich erhöht wird. Diese vorerwähnten Misch-Schikanen dienen also dazu, mindestens zwei Medien intensiv miteinander zu vermischen. Die Durchtrittsquerschnitte in der Mischkammer und am Auslass sollten je nach der Zähflüssigkeit der Medien ge wählt werden. Die Grösse der Mischkammer wird ebenfalls je nach dem gewünschten Durchsatz gewählt; so könnte z.B. im einen Fall die Mischkammer eine solche Grösse haben, dass ein Durchsatz von 500 g/Minute erreicht wird und in einem anderen Fall wird ein Durchsatz von 700 g/Minute erreicht.

Es hat sich nunmehr gezeigt, dass ein solches bekanntes Mischgerät nicht befriedigt, wenn unbedingt gewährleistet sein muss, dass die in der Mischkammer zu mischenden Medien gesamthaft, also ohne Verbleib oder Rezirkulation, aus dem Auslass austreten müssen. Beim bekannten Mischgerät war also keine Gewähr gegeben, dass das Gesamte der zu vermischenden Medien unbedingt fortlaufend dem Auslass zu und aus diesem herausgefördert wurde, d.h. es konnte nicht verhindert werden, dass ein Teil der miteinander vermischten Medien innerhalb der Mischkammer rezirkulierte oder ohne Strömung an exponierten Stellen verharrte. Zwischen den erwähnten Misch-Flügeln und der Mantelfläche der Mischerwelle besteht eine Linienberührung mit verhältnismässig geradem Linienzug, wenn auch schräggestellt zur Drehachse der Mischerwelle. Die vorerwähnten Längsrinnen beginnen an einer Stirnfläche, die eine Art Prallplatte für die zu vermischenden und strömenden Medien ist. An diesen Stellen vermindern die Medien ihre Strömung, rezirkulieren und werden jedenfalls nicht sofort nach dem Vermischen zum Auslass gefördert. Es ist klar erkennbar, dass ein solches Verhalten der Medien nachteilig ist, insbesondere dann, wenn die Medien mit der Zeitdauer einer Veränderung unterliegen. Diese Veränderung kann z.B. darin liegen, dass ein Teil der Medien altert, aushärtet oder sonst seine Zähflüssigkeit verändert. Unzumutbar wird ein solches Verharren von Medienanteilen innerhalb der Mischkammer dann, wenn z.B. das eine Medium ein feuchtigkeitshärtender Kleber und das zweite Medium ein Aushärtungs-Beschleuniger ist. In einem solchen Fall härtet also ein Teil der in der Mischkammer befindlichen Medien innerhalb der Mischkammer aus und setzt sich an Mischkammer, Mischerwelle oder Misch-Schikanen ab. Das bedeutet aber, dass ein solches Mischgerät aus dem vorerwähnten Grund immer wieder von solchen Rückständen gereinigt werden muss.

Es wird die Schaffung eines Mischgerätes bezweckt, bei dem die vorerwähnten Nachteile vermieden werden können.

Das erfindungsgemässe Mischgerät ist dadurch gekennzeichnet, dass die Mantelfläche der gehäusefesten Mischkammer mit zweiten Misch-Schikanen bestückt ist, dass die ersten und zweiten Misch-Schikanen als erste und zweite Stifte ausgebildet sind, die von ihrer jeweils zugeordneten Mantelfläche aus abragen und eine kreis-, ovaloder tropfenförmige Querschnittsfläche aufweisen.

In der Zeichnung ist ein Ausführungsbeispiel des Erfindungsgegenstandes dargestellt. Es zeigen:

Figur 1 ein Mischgerät im Längsschnitt,

Figur 2 einen Schnitt nach der Linie II-II in Figur 1, und

Figur 3 drei verschiedene Querschnittsflächen von ersten und zweiten Misch-Schikanen der Mischkammer und der Mischerwelle nach den Darstellungen a), b) und c).

Das Mischgerät hat einen Mischkopf 1 zum Leiten der Medien, wobei über einen Kanal 2 ein feuchtigkeitshärtender Kleber und über einen Kanal 3 ein Aushärtungs-Beschleuniger einer Mischkammer 4 zugeführt werden. Die Mischkammer 4 befindet sich innerhalb eines gehäusefesten Teils 5, der einerends am Mischkopf 1 befestigt ist und andererends einen Auslass 6 aufweist. Die Mischkammer 4 hat einen ersten Mischkammerabschnitt 7 und einen in Strömungsrichtung daran anschliessenden zweiten Mischkammerabschnitt 8. Der erste Mischkammerabschnitt 7 ist mit einer konischen Mantelfläche 9 versehen, und der zweite Mischkammerabschnitt 8 weist eine kreiszylindrische Mantelfläche 10 auf.

Der die Mischkammer 4 aufweisende gehäusefeste Teil 5 und der Mischkopf 1 werden von einer drehbaren Mischerwelle 11 durchsetzt, die mittels zweier Lager drehbar gelagert ist, wobei aber nur ein Lager 12 dargestellt ist. Zwischen Mischkopf 1 und Mischerwelle 11 befindet sich noch eine Dichtung 13. Die beiden vorerwähnten zähflüssigen Medien werden über nicht dargestellte Druckleitungen über die Kanäle 2 und 3 der Mischkammer 4 zugeführt. Diese beiden miteinander zu vermischenden Medien können hochviskose Polyurethane sein. Die Mischerwelle 4 weist einen im ersten Mischkammerabschnitt 8 liegenden Teil 15 auf. Die Mischerwelle 11 hat die Drehachse 16.

Der Teil 14 der Mischerwelle 11 ist mit ersten Misch-Schikanen 17 bestückt. Die Mantelfläche 9 des Mischkammerabschnitts 7 ist mit zweiten Misch-Schikanen 18 bestückt. Der im Mischkammerabschnitt 8 liegende Teil 15 der Mischerwelle 11 ist mit dritten Misch-Schikanen 19 bestückt.

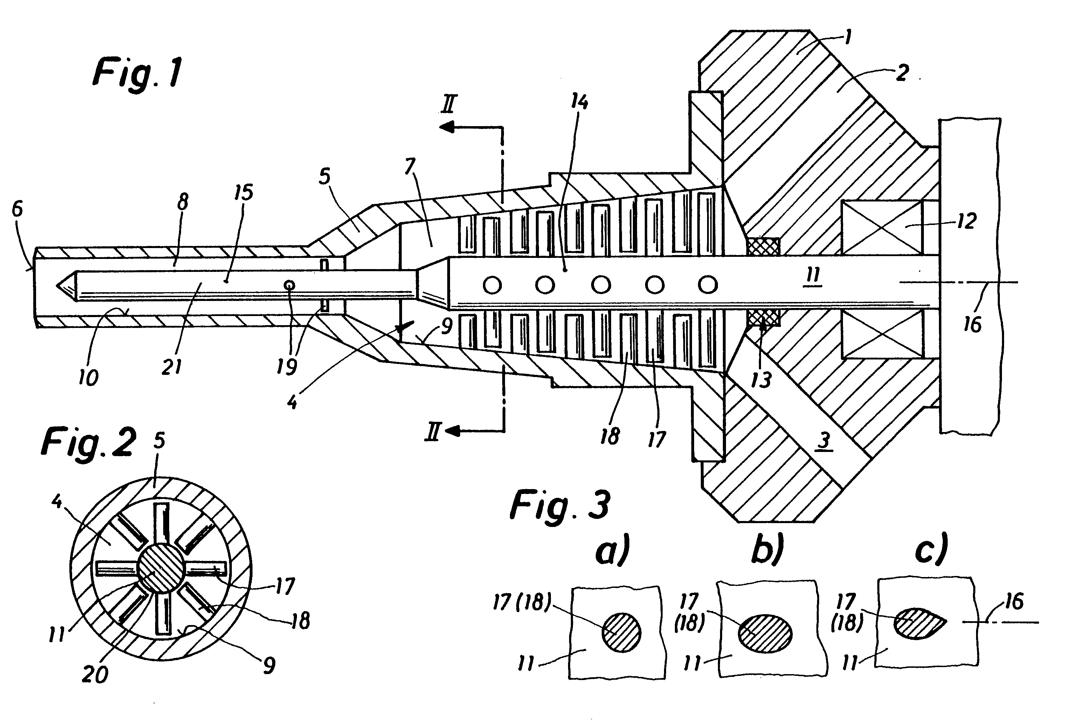

Die ersten, zweiten und dritten Misch-Schikanen 17, 18 und 19 sind als Stifte ausgebildet, so dass also erste, zweite und dritte Stifte 17, 18 und 19 vorliegen. Die Stifte 17 ragen von der Mantelfläche 20 der Mischerwelle 11 ab. Die Stifte 18 ragen von der Mantelfläche 9 der Mischkammer 4 ab, und die Stifte 19 ragen von der Mantelfläche 21 der Mischerwelle 11 ab. Die Querschnittsfläche der Mischkammer 4 nimmt im Mischkammerabschnitt 7 in Richtung zum Auslass 6 hin zunehmend ab, so dass sich die Länge der ersten Stifte 17 und der zweiten Stifte 18 in Richtung zum Auslass 6 hin zunehmend verkürzt. In Richtung der Drehachse 16 der Mischerwelle 11 befinden sich mehrere erste und zweite Stifte 17 und 18 in Reihe hintereinander und im Abstand voneinander. Aus Figur 2 ist ersichtlich, dass über den Umfang der Mischerwelle 11 verteilt vier Stifte 17 gleichmässig verteilt sind. Es stehen weiterhin fünf solcher Stifte 17 in Richtung der Drehachse 16 in einer Reihe hintereinander, so dass also insgesamt der Teil 14 der Mischerwelle 11 zwanzig Stifte 17 aufweist. Die gehäusefesten Stifte 18 sind in gleicher Weise angeordnet, also vier über den Umfang verteilt und fünf in Reihe hintereinander, also ebenfalls insgesamt zwanzig Stifte 18. Aus Figur 1 ist ersichtlich, dass sich immer die drehenden Stifte 17 und die gehäusefesten Stifte 18 in Richtung der Drehachse 16 nacheinander abwechseln. Die ersten, zweiten und dritten Stifte 17, 18 und 19 stehen rechtwinklig zur Drehachse 16 der Mischerwelle 11.

Beim gezeigten Ausführungsbeispiel nach den Figuren 1 und 2 sind die ersten und zweiten Misch-Schikanen, also die Stifte 17 und 18, zylindrisch ausgebildet. Bei einem nicht dargestellten Ausführungsbeispiel könnten die Stifte 17 und 18 auch konisch sein. In der Praxis hat es sich gezeigt, dass es am vorteilhaftesten ist, wenn die Querschnittsfläche der Stifte 17 und 18 kreisförmig ist, wie es in Figur 3 beim Beispiel a) gezeigt ist. Das bedeutet, dass die miteinander zu vermischenden Medien bzw. die bereits miteinander vermischten Medien am besten solche eine kreisförmige Querschnittsfläche aufweisenden Stifte 17 und 18 umströmen und sich nicht daran absetzen. Gute Ergebnisse werden auch mit einer ovalförmigen Querschnittsfläche oder einer tropfenförmigen Querschnittsfläche erreicht, die in Figur 3 beim Beispiel b) und Beispiel c) gezeigt werden.

Die Stifte 19 können ebenfalls solche in Figur 3 gezeigte Querschnittsflächen aufweisen. Beim dargestellten Ausführungsbeispiel sind über den Umfang verteilt zwei Stifte 19 vorhanden. Hierzu um 90° versetzt und im Abstand davon liegen nochmals zwei Stifte 19. Diese Stifte 19 dienen dazu um die miteinander vermischten Medien im zylindrischen Mischkammerabschnitt 8 noch etwas zu vermischen und ihnen eine geringe Drallströmung zu verleihen. Das eigentliche Mischen der Medien erfolgt im konischen Mischkammerabschnitt 7 mittels der Stifte 17 und 18. Bei solchen in Figur 3 gezeigten Querschnittsflächen der Stifte 17 und 18 ist am besten Gewähr gegeben, dass kein Anteil der miteinander vermischten Medien innerhalb der Mischkammer 4 zur Ruhe kommt oder darinnen rezirkuliert wird, so dass keinerlei Aushärten der miteinander vermischten Medien innerhalb der Mischkammer 4 eintritt. Die miteinander vermischten Medien lösen sich also bei einer solchen erläuterten Querschnittsfläche der ersten und zweiten Misch-Schikanen 17 und 18 am besten von diesen ab. Mit einem solchen erfindungsgemässen Mischgerät wird weiterhin eine sehr gute Vermischung der Medien auch bei hohem Durchsatz erreicht. Wenn, wie eingangs erwähnt, durch den Kanal 2 ein feuchtigkeitshärtender Kleber und durch den Kanal 3 ein Aushärtungs-Beschleuniger zugeführt wird, so wird folgendermassen vorgegangen, wenn nach einer gewissen Betriebsdauer eine Reinigung erforderlich ist: Das Mischgerät wird mit dem über den Kanal 2 zugeführten Medium (Kleber) gespült, d.h. die Mischkammer 4 bleibt nach der Spülung mit diesem Medium (Kleber) gefüllt und kann mit diesem Medium allein wieder angefahren werden zum Abgeben des Klebers am Auslass 6 auf einen nicht dargestellten zu klebenden Gegenstand. Der mit diesem Medium (Kleber) versehene Gegenstand härtet nur nach längerer Zeit , z.B. nach 24 Stunden aus (gegenüber einer Aushärtezeit von z.B. 0,5 Stunden bei miteinander vermischten Medien (Kleber + Beschleuniger).

**Ansprüche**

1. Mischgerät für mindestens zwei zähflüssige Medien, mit einem Mischkopf (1) zum Leiten der Medien, einer Mischkammer (4) zum Mischen der Medien und einem Auslass (6) für die miteinander vermischten Medien, wobei sich innerhalb der gehäusefesten Mischkammer (4) eine drehbare Mischerwelle (11) befindet, deren Mantelfläche mit ersten Misch-Schikanen (17) bestückt ist, dadurch gekennzeichnet, dass die Mantelfläche (9) der gehäusefesten Mischkammer (4) mit zweiten Misch-Schikanen (18) bestückt ist, dass die ersten und zweiten Misch-Schikanen (17,18) als erste und zweite Stifte ausgebildet sind, die von ihrer jeweils zugeordneten Mantelfläche (20,9) aus abragen und eine kreis-, oval oder tropfenförmige Querschnittsfläche aufweisen.

2. Mischgerät nach Anspruch 1, dadurch gekennzeichnet, dass die ersten und/oder zweiten Misch-Schikanen (17,18) als zylindrische erste und zweite Stifte ausgebildet sind.

3. Mischgerät nach Anspruch 1, dadurch gekennzeichnet, dass die ersten und/oder zweiten Misch-Schikanen (17,18) als konische erste und zweite Stifte ausgebildet sind.

4. Mischgerät nach Anspruch 1, dadurch gekennzeichnet, dass die ersten und zweiten Stifte (17,18) rechtwinklig zur Drehachse (16) der Mischerwelle (11) stehen.

5. Mischgerät nach Anspruch 1, dadurch gekennzeichnet, dass sich in Richtung der Drehachse (16) der Mischerwelle (11) mehrere erste und zweite Stifte (17,18) in Reihe hintereinander und im Abstand voneinander befinden.

6. Mischgerät nach Anspruch 5, wobei sich die Querschnittsfläche der Mischkammer (4) in Richtung zum Auslass (6) hin zunehmend verkleinert, dadurch gekennzeichnet, dass sich die Länge der ersten und zweiten Stifte (17,18) in Richtung zum Auslass (6) hin zunehmend verkürzt.

7. Mischgerät nach Anspruch 1, gekennzeichnet durch einen ersten Mischkammerabschnitt (7) mit konischer Mantelfläche (9) und einen in Richtung zum Auslass (6) hin nachfolgenden zweiten Mischkammerabschnitt (8) mit kreiszylindrischer Mantelfläche (10), und dass sich die ersten und zweiten Stifte (17,18) im ersten Mischkammerabschnitt (7) befinden.

8. Mischgerät nach Anspruch 7, dadurch gekennzeichnet, dass der im zweiten Mischkammerabschnitt (8) liegende Teil (15) der Mischerwelle (11) mit dritten Misch-Schikanen (19) bestückt ist, die als dritte Stifte ausgebildet sind, die von ihrer Mischerwelle-Mantelfläche (21) aus abragen und eine kreis-, oval- oder tropfenförmige Querschnittsfläche aufweisen, und dass sich in Richtung der Drehachse (16) der Mischerwelle (11) mehrere dritte Stifte (19) hintereinander, im Abstand voneinander und über den Umfang zueinander versetzt befinden.

9. Verwendung des Mischgerätes nach Anspruch 1 zum Mischen von hochviskosen Polyurethanen.

10. Verwendung nach Anspruch 9, wobei zwei Medien miteinander vermischt werden und das eine Medium ein feuchtigkeitshärtender Kleber und das zweite Medium ein Aushärtungs-Beschleuniger ist.

*Fig. 1*

*Fig. 2*

*Fig. 3*

a)  b)  c)

EP 0 328 936 A1

Europäisches
Patentamt

**EUROPÄISCHER RECHERCHENBERICHT**

Nummer der Anmeldung

EP 89 10 1675

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 881 871 (PORTER) <br> * Figuren * <br> --- | 1-5,7-10 | B 29 B 7/40 |
| A | US-A-2 779 752 (VINING) <br> * Figuren * <br> --- | 1-5 | |
| A | GB-A-1 548 571 (GROOM) <br> * Figur 4 * <br> --- | 3 | |
| A | WO-A-8 602 860 (TATABANYA SZENBANYAK) <br> * Figuren * <br> ----- | 7 | |

**RECHERCHIERTE SACHGEBIETE (Int. Cl.4)**

B 01 F
B 29 B

Der vorliegende Recherchenbericht wurde für alle Patentansprüche erstellt

| Recherchenort | Abschlußdatum der Recherche | Prüfer |
|---|---|---|
| DEN HAAG | 09-05-1989 | PEETERS S. |